# FASCICULE DE BREVET EUROPEEN

(11) **EP 3 788 290 B1**
(45) Date de publication et mention de la délivrance du brevet: **15.06.2022**
(21) Numéro de dépôt: 19722852.1
(22) Date de dépôt: 03.05.2019
(51) Int. Cl.: F16L 37/12, F16L 37/091

(54) **DISPOSITIF DE RACCORDEMENT**
VERBINDUNGSVORRICHTUNG
CONNECTION DEVICE

(30) Priorité: 04.05.2018 FR 1853900
(43) Date de publication de la demande: 10.03.2021
(73) Titulaire: Parker Hannifin EMEA S.à.r.l., 1163 Etoy (CH)
(72) Inventeur: LE QUERE, Philippe, 35830 BETTON (FR)
(74) Mandataire: Lavialle, Bruno François Stéphane
(86) Numéro de dépôt international: PCT/EP2019/061463
(87) Numéro de publication internationale: WO 2019/211478

(56) Documents cités:
- WO-A1-2013/175351
- US-A1- 2018 038 539

## Description

La présente invention concerne le domaine des circuits de transport de fluide. De tels circuits servent principalement à la constitution de réseaux pneumatiques et hydrauliques.

### ETAT DE LA TECHNIQUE

Un circuit de transport de fluide comprend des tubes reliés entre eux et à des éléments émetteurs ou récepteurs de fluide par des dispositifs de raccordement.

Le document WO2013/175351A1 divulgue un raccord rapide pour terminaux filetés ou profilés, lequel raccord comprend un corps central s'étendant entre une extrémité supérieure pouvant être reliée de façon étanche et amovible au terminal, et une extrémité inférieure, pouvant être reliée à un circuit de fluide, ce qui permet, quand le raccord est relié au terminal, le passage du fluide entre le circuit et le terminal. Le raccord comprend une pince de prise associée de façon fonctionnelle au corps central et pouvant être actionnée entre au moins une première configuration, dans laquelle elle ne vient pas en prise avec le terminal et permet le couplage ou le découplage du corps central avec et à partir du terminal, et une seconde configuration, dans laquelle elle vient en prise, intérieurement ou extérieurement, avec le terminal, et relie le corps central à celui-ci. Le raccord comprend en outre des moyens d'activation, actifs de façon mobile sur le corps central et/ou sur la pince de prise, de façon à permettre le passage de la pince de prise entre les première et seconde configurations, et, par conséquent, le couplage et le découplage du corps central avec et à partir du terminal. La pince de prise entoure extérieurement le corps central, et est réalisée d'un seul tenant, la pince de prise comprenant un collier de base et une pluralité d'éléments flexibles qui s'étendent axialement sur un même côté que le collier dans des positions de flanc périphériques, les éléments flexibles étant séparés les uns des autres par des fentes longitudinales. Chaque élément flexible est pourvu d'une extrémité inférieure, solidaire du collier, et d'une extrémité supérieure opposée à l'extrémité inférieure et pourvue d'une partie opérationnelle filetée ou profilée, apte à coopérer avec une portion d'un filetage ou d'un profilage du terminal, les extrémités supérieures des éléments flexibles réalisant globalement un filetage ou un profilage de la pince d'engagement.

Il est connu un dispositif de raccordement de type cartouche comprenant un corps tubulaire pourvu intérieurement de moyens de connexion pour y assujettir une portion d'extrémité d'un tube et extérieurement d'un filetage pour coopérer avec un taraudage d'un puits qui est ménagé dans un élément du circuit dans le prolongement d'un canal de circulation du fluide. Le corps est également pourvu de moyens d'étanchéité pour assurer l'étanchéité du raccordement de l'extrémité de tube à l'élément de circuit. Les moyens de connexion comprennent par exemple une rondelle d'accrochage dentée intérieurement et prise entre un élément d'étanchéité et un insert de blocage en position axiale de la rondelle et de l'élément d'étanchéité dans le corps tubulaire.

La mise en place du dispositif de raccordement nécessite de le visser dans le puits, ce qui est relativement long.

### OBJET DE L'INVENTION

Un but de l'invention est de fournir un moyen pour accélérer la mise en place du dispositif de raccordement dans le puits taraudé d'un élément de circuit.

### BREF EXPOSE DE L'INVENTION

A cet effet, on prévoit, selon l'invention, un dispositif de raccordement comprenant un corps tubulaire pourvu intérieurement de moyens de connexion pour y assujettir une portion d'extrémité d'un tube et extérieurement d'une portion de surface filetée ayant un diamètre nominal correspondant à celui d'un taraudage d'un élément de circuit pour pouvoir être vissé dans celui-ci, le corps étant également pourvu de moyens d'étanchéité pour assurer une étanchéité du raccordement de la portion d'extrémité de tube à l'élément de circuit. La portion de surface filetée s'étend sur un premier tronçon terminal du corps, ledit premier tronçon terminal du corps comportant des fentes sensiblement axiales délimitant entre elles des bras élastiquement déformables entre un état de repos dans lequel les bras délimitent un diamètre nominal de filetage sensiblement égal au diamètre nominal du taraudage et un état déformé dans lequel le diamètre nominal de filetage est inférieur au diamètre intérieur du taraudage. Un verrou tubulaire est monté dans le corps pour coulisser axialement entre une position de déverrouillage dans laquelle le verrou a un premier tronçon d'extrémité dégagé des bras pour les laisser libres de se déformer et une position de verrouillage dans laquelle le premier tronçon d'extrémité du verrou est en regard des bras pour s'opposer à leur déformation, la portion d'extrémité de tube venant en appui contre le verrou lors de son introduction dans le corps pour l'amener dans ladite position de verrouillage.

Ainsi, il est possible d'insérer le dispositif de raccordement dans le puits taraudé sans le visser, les bras se déformant du fait du glissement axial du filet du filetage sur le filet du taraudage. L'insertion est terminée lorsqu'une surface du corps vient butée contre une surface de l'élément de circuit dans la direction axiale et s'oppose une insertion plus importante du corps dans le puits taraudé. Il peut alors être nécessaire d'effectuer un léger vissage du corps dans le puits taraudé de manière à serrer ces deux surfaces l'une contre l'autre. Le verrouillage des bras dans leur état de repos va s'opposer à une déformation des bras qui va survenir sous la pression du circuit ou sous un effort de traction qui serait exercé accidentellement sur le corps en vue de l'extraire du dispositif de raccordement. Le verrouillage est obtenu lors de la connexion de la portion d'extrémité de tube sans autre intervention de l'opérateur que de s'assurer que la portion d'extrémité de tube est suffisamment engagée dans le corps du dispositif de raccordement. On notera que le corps du dispositif de raccordement possède une vraie surface filetée qui coopère par vissage et dévissage avec le puits taraudé sans produire de copeaux comme pourraient le faire des dents d'ancrage solidaire du corps pour s'arc-bouter contre le filet du puits taraudé.

D'autres avantages de l'invention sont définis par les revendications dépendantes.

De préférence, le verrou comprend des moyens de son blocage en position de verrouillage.

Ceci évite que lors du retrait de l'extrémité de tube, le corps du dispositif de raccordement ne soit extrait en tout ou partie du puits taraudé.

Selon un mode de réalisation particulier, les moyens de blocage comprennent au moins une patte élastiquement déformable qui est formée dans le verrou pour s'étendre axialement et qui possède au moins un redan externe comprenant une rampe agencée pour, lorsque le verrou coulisse de sa position de déverrouillage vers sa position de verrouillage, glisser sur une portion interne du corps en provoquant une déformation de la patte vers une position escamotée, la patte revenant élastiquement vers une position de repos lorsque la rampe quitte la portion interne de telle manière que le redan présente une face de butée en regard d'un épaulement de la portion interne pour s'opposer à un déplacement accidentel du verrou vers sa position de déverrouillage.

Ce mode de réalisation est particulièrement simple.

Avantageusement, le redan a une hauteur telle que, lorsque la patte revient élastiquement dans sa position de repos après que le redan a dépassé la portion interne, la patte heurte la portion interne en produisant un son.

Ainsi, l'opérateur est informé du fait que l'extrémité de tube a été suffisamment enfoncée dans le corps du raccord pour réaliser à la fois le verrouillage et la connexion de l'extrémité de conduite au dispositif de raccordement.

Avantageusement encore, la face de butée appartenant à la patte est légèrement inclinée pour permettre à un opérateur de ramener le verrou en position de déverrouillage en exerçant un effort axial sur le verrou.

Le dispositif de raccordement peut donc être réutilisé après avoir été extrait de l'élément de circuit.

Selon une caractéristique particulière, les moyens d'étanchéité comprennent un joint annulaire monté à l'intérieur du corps en amont de la portion interne pour enserrer élastiquement la portion d'extrémité de tube lorsque celle-ci est assujettie dans le corps et le verrou comprend un deuxième tronçon d'extrémité reçu serré dans le joint lorsque le verrou est dans sa position de déverrouillage.

Ainsi, lorsque le verrou est dans sa position de déverrouillage, son deuxième tronçon d'extrémité est reçu serré dans le joint et maintient celui-ci dans un état déformé. Lors de l'introduction de la portion d'extrémité de tube dans le corps, la portion d'extrémité de tube vient en appui contre le deuxième tronçon d'extrémité du verrou et repousse le verrou en passant dans le joint qui va rester élastiquement déformé. Dès lors, il n'est pas nécessaire de déformer le joint pour permettre le passage de la portion d'extrémité de tube au travers du joint, ce qui facilite la connexion de ladite portion d'extrémité.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue en coupe axiale d'un dispositif de raccordement selon l'invention, au début de son insertion dans un puits taraudé d'un élément d'un circuit de transport de fluide ;
- la figure 2 est une vue analogue à la figure 1 de ce dispositif de raccordement, à la fin de son insertion dans le puits taraudé et avant l'introduction de la portion d'extrémité de tube ;
- la figure 3 est une vue analogue à la figure 1 de ce dispositif de raccordement, lors de l'introduction de la portion d'extrémité de tube et avant le verrouillage ;
- la figure 4 est une vue analogue à la figure 1 de ce dispositif de raccordement, à la fin de l'introduction de la portion d'extrémité de tube et au moment du verrouillage ;
- la figure 5 est une vue analogue à la figure 1 de ce dispositif de raccordement, à la fin du verrouillage ;
- la figure 6 est une vue analogue à la figure 1 de ce dispositif de raccordement, lors du retrait de la portion d'extrémité de tube ;
- la figure 7 est une vue analogue à la figure 1 de ce dispositif de raccordement, prêt à être réutilisé après son extraction hors du puits taraudé et son déverrouillage.

### DESCRIPTION DETAILLEE DE L'INVENTION

En référence aux figures, l'invention un dispositif de raccordement destiné à équiper un élément de circuit, généralement désigné en 1, d'un circuit de transport de fluide. L'élément de circuit 1 est un élément émetteur et/ou récepteur de fluide comme une pompe, un réservoir, un distributeur, un actionneur, un régulateur de débit, un régulateur de pression... L'élément de circuit 1 comprend un puits taraudé 2 ayant une extrémité débouchant dans un lamage 3 ménagé sur une face 4 de l'élément de circuit 1 et une extrémité opposée débouchant dans un canal 5 s'étendant dans l'élément de circuit 1.

Le dispositif de raccordement comprend un corps 100 tubulaire divisé axialement en un premier tronçon terminal 101 et un deuxième tronçon terminal 102 qui s'étendent coaxialement l'un à l'autre et délimitent un canal s'étendant sur toute la longueur du cops 100.

Le deuxième tronçon terminal 102 est pourvu intérieurement de moyens de connexion pour y assujettir la portion d'extrémité de tube 10. Les moyens de connexion comprennent un insert 106 en deux parties tubulaires qui sont logées dans le canal du corps 100 en emprisonnant entre elles une rondelle d'accrochage 107 et recevant à coulissement un poussoir 108 de forme tubulaire. La rondelle d'accrochage 107 est déformable élastiquement et a une circonférence interne divisée en dents agencées pour mordre la surface extérieure de la portion d'extrémité de tube 10. Le poussoir 108 a une première extrémité en saillie à l'extérieur du corps 100 et une deuxième extrémité à l'intérieur de l'insert 106 au voisinage de la rondelle d'accrochage 107, et est monté dans l'insert 106 pour coulisser entre une première position dans laquelle le poussoir 108 laisse les dents de la rondelle d'accrochage 107 libres de mordre la portion d'extrémité de tube 10 et une deuxième position dans laquelle la deuxième extrémité du poussoir 108 soulève les dents de la rondelle d'accrochage 107 pour les empêcher de mordre la portion d'extrémité de tube 10. Les moyens de connexion 106 sont connus en eux-mêmes et ne seront pas plus détaillés ici.

Un joint d'étanchéité 109 de forme annulaire est logé entre l'insert 106 et un épaulement interne du deuxième tronçon terminal 102. Le joint d'étanchéité 109 est en un matériau élastiquement déformable et a un diamètre externe supérieur à un diamètre du canal du deuxième tronçon terminal 102 et un diamètre interne inférieur à un diamètre externe de la portion d'extrémité de tube 10. Ce mode d'étanchéité est connu en lui-même et ne sera pas plus détaillé ici.

Le corps 100 est pourvu d'une collerette externe 110 entre le premier tronçon terminal 101 et le deuxième tronçon terminal 102. La collerette externe 110 présente, du côté du premier tronçon terminal 101, un épaulement dans lequel une gorge plane est ménagée. Dans cette gorge plane est logé un joint d'étanchéité annulaire 111 destiné à être pressé contre le fond du lamage 3 lorsque le dispositif de raccordement est en place sur l'élément de circuit 1.

Les joints d'étanchéité 109, 111 permettent d'assurer une étanchéité du raccordement de la portion d'extrémité de tube 10 à l'élément de circuit 1.

Le premier tronçon terminal 101 possède extérieurement une portion de surface filetée 103 ayant un diamètre nominal.

Le premier tronçon terminal 101 du corps 100 comporte des fentes 105 sensiblement axiales délimitant entre elles des bras 104 ayant chacun une extrémité libre à l'opposé du deuxième tronçon terminal 102. Les bras 104 ont une surface extérieure filetée 103 de telle manière que la surface extérieure du premier tronçon terminal 101 porte un filetage sensiblement continu. Les bras 104 sont élastiquement déformables entre un état de repos dans lequel les bras 104 délimitent un diamètre nominal de filetage dn sensiblement égal au diamètre nominal Dn du puits taraudé 2 et un état déformé dans lequel le diamètre nominal de filetage dn est inférieur au diamètre intérieur Di du puits taraudé 2.

Un verrou 200 tubulaire ayant une premier tronçon d'extrémité 201 et un deuxième tronçon d'extrémité 202 est monté dans le corps 100 pour coulisser axialement entre une position de déverrouillage dans laquelle le premier tronçon d'extrémité 201 est dégagé des bras 104 pour les laisser libres de se déformer et une position de verrouillage dans laquelle le premier tronçon d'extrémité 201 est en regard des bras 104 pour s'opposer à leur déformation.

Le verrou 200 comprend des moyens de son blocage en position de verrouillage. Les moyens de blocage comprennent deux pattes 203 élastiquement déformables qui sont formées dans le verrou 200 en deux zones diamétralement opposées du verrou 200. Chaque patte 203 est délimitée par une découpe en U et s'étend parallèlement à l'axe central du verrou 200. Chaque patte 203 possède au moins un redan 205 externe qui possède, du côté de l'extrémité libre du premier tronçon d'extrémité 201, une rampe dont la hauteur décroît en direction de ladite extrémité libre et, du côté de l'extrémité libre du deuxième tronçon d'extrémité 202, une portion étagée avec une partie haute une face de butée 207 reliée à une partie basse par une surface annulaire radiale. La partie basse du redan 205 est écartée du deuxième tronçon d'extrémité 202 par une encoche de réception d'une portion interne 112 du corps 100 comme il sera expliqué plus tard.

Le redan 205 est ainsi agencé pour, lorsque le verrou 200 coulisse de sa position de déverrouillage vers sa position de verrouillage, glisser sur une portion interne 112 du corps 100 en provoquant une déformation de la patte 203 vers une position escamotée. Chaque patte 203 est en outre agencée pour revenir élastiquement vers une position de repos lorsqu'elle quitte la portion interne 112 de telle manière que la face de butée 207 s'étende en regard d'un épaulement 113 de la portion interne 112 pour s'opposer à un déplacement accidentel du verrou 200 vers sa position de déverrouillage. Le redan 205 a ici une hauteur telle que, lorsque la patte 203 revient élastiquement dans sa position de repos après que le redan 205 a dépassé la portion interne 112, la patte 203 heurte la portion interne 112 en produisant un son. La portion interne 112 est ici une collerette.

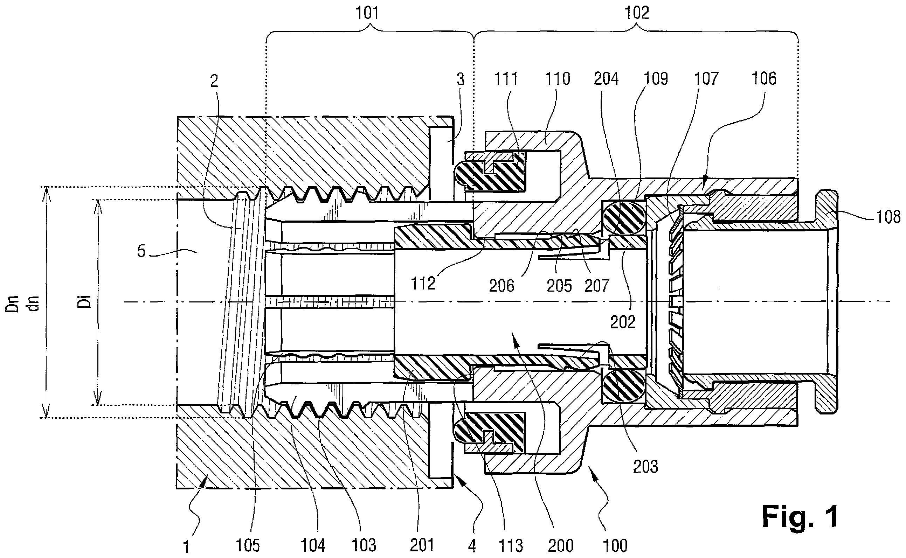

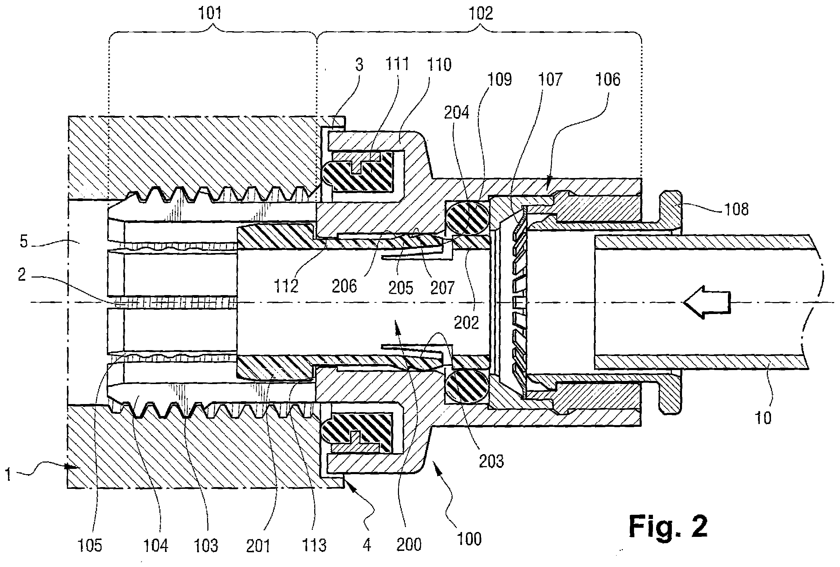

Pour mettre le dispositif de raccordement en place sur l'élément de circuit 1, il suffit d'introduire le premier tronçon terminal 101 dans le puits taraudé 2 (figure 1) jusqu'à amener le joint 111 en appui contre le fond du lamage 3 (figure 2). Lors de l'insertion, les bras 104 vont se déformer élastiquement sous l'effort de poussée radiale engendré par le glissement des surfaces latérales des filets de la surface filetée 103 et des filets du puits taraudé 2 l'une contre l'autre, les bras 104 revenant dans leur position de repos à chaque fois que les filets se trouvent dans des creux inter-filets.

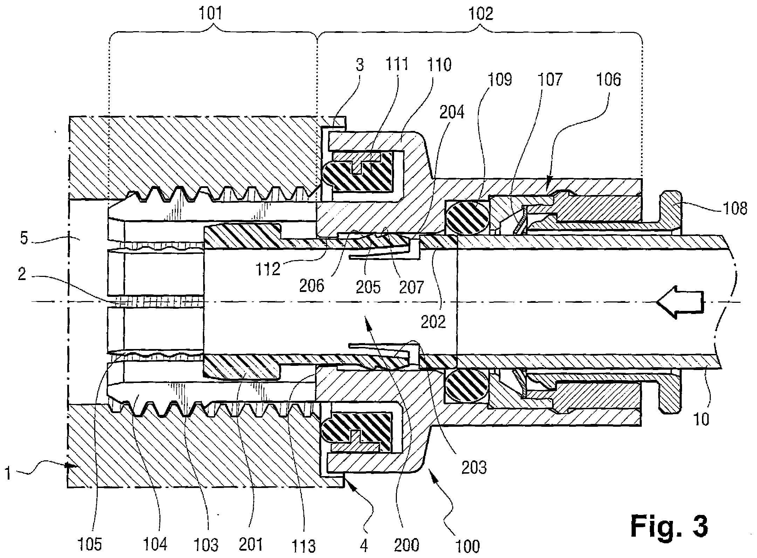

La portion d'extrémité de tube 10 est alors introduite dans le poussoir 108 (figure 2). La portion d'extrémité de tube 10 arrive en appui contre le verrou 200 lors de son introduction dans le corps 100 (figure 3) et commence à l'amener dans ladite position de verrouillage. Ce faisant, la portion d'extrémité de tube 10 pénètre dans le joint 109 et se substitue, dans le joint 109, au deuxième tronçon d'extrémité 202 du verrou 200 qu'elle chasse du joint 109.

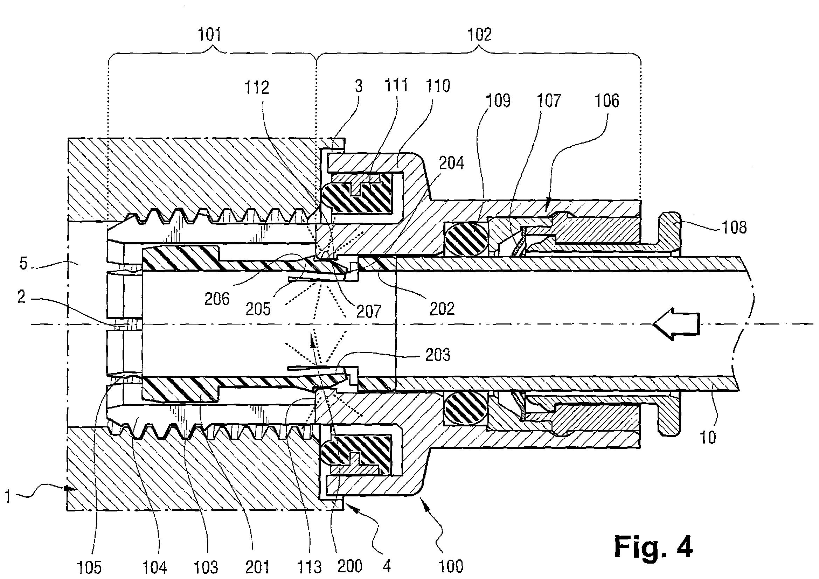

Les pattes 203 se déforment sous l'effet du glissement de la rampe contre la portion interne 112 avant de revenir heurter la portion interne 112 une fois que la partie haute du redan 205 a passé la portion interne 112 et se trouve en face de l'épaulement 113 (figure 4). Il est ainsi créé un choc générateur de bruit indiquant à l'opérateur que les bras 104 sont verrouillés.

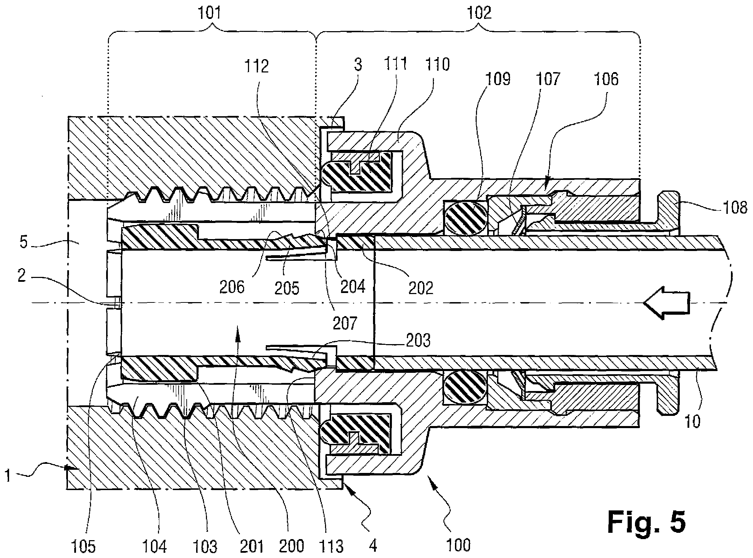

L'effort d'insertion se poursuit jusqu'à ce que le deuxième tronçon d'extrémité 202 soit en butée axiale contre la portion interne 112 alors reçue dans l'encoche séparant le redan 205 et le deuxième tronçon d'extrémité 202 (figure 5). La connexion de la portion d'extrémité de tube 10 au dispositif de raccordement est terminée, ainsi que le verrouillage des bras 104.

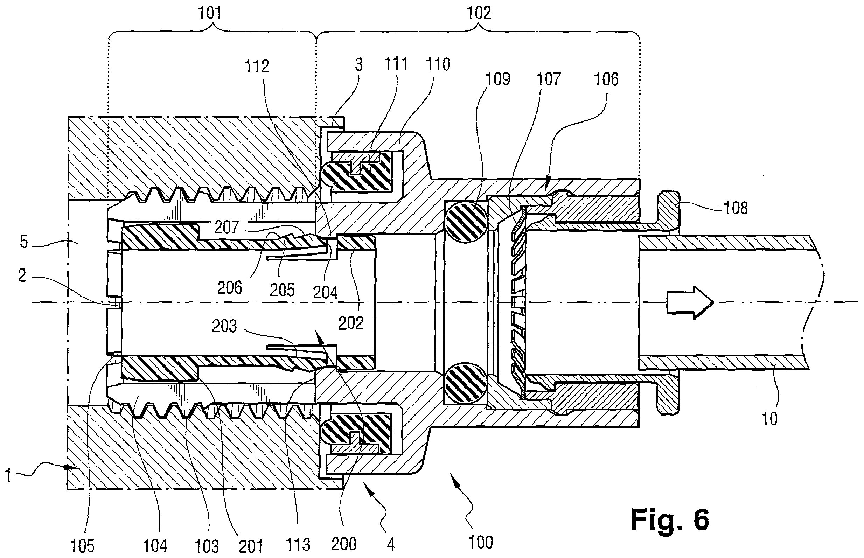

Au retrait du tube, le verrou 200 reste dans sa position de verrouillage et le dispositif de raccordement ne peut être retiré que par dévissage (figure 6).

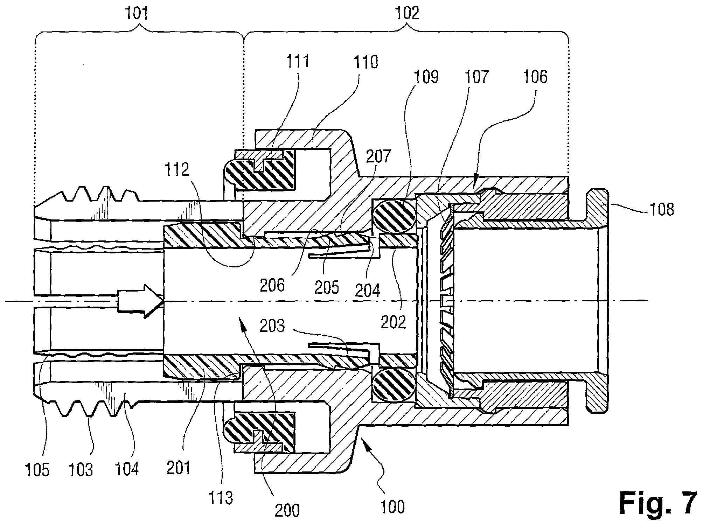

De préférence, la face de butée 207 appartenant à la patte 203 est légèrement inclinée pour former une rampe raide permettant à un opérateur de ramener le verrou 200 en position de déverrouillage en exerçant un effort axial sur le verrou 200 comme représenté sur la figure 7. La portion étagée facilite la déformation des pattes 203 lorsque l'opérateur ramène le verrou 200 en position de déverrouillage en exerçant un effort axial sur le verrou 200. La portion interne 112 peut aussi être plus ou moins biseautée du côté de l'épaulement 113 pour faciliter le retour du verrou 200 en position de déverrouillage par l'opérateur.

Pour faciliter l'insertion et/ou, éventuellement le retrait avant verrouillage, du corps 100 hors du puits taraudé 2, la surface filetée 103 présente avantageusement des chanfreins avant et/ou arrière.

Bien entendu, l'invention n'est pas limitée aux modes de réalisation décrits mais englobe toute variante entrant dans le champ de l'invention telle que définie par les revendications.

En particulier, le nombre de bras peut être différent de celui représenté.

Les moyens de verrouillage du verrou 200 en position de verrouillage sont facultatifs ou peuvent être réalisés différemment par exemple au moyen d'une goupille mise en place par l'opérateur.

Le nombre de pattes 203 peut être inférieur ou supérieur à deux.

Chaque patte 203 peut comprendre deux redans externes ou plus.

Le redan peut ne pas comprendre de portion étagée.

## Revendications

1. Dispositif de raccordement, comprenant un corps (100) tubulaire pourvu intérieurement de moyens de connexion (106, 107, 108) pour y assujettir une portion d'extrémité (10) d'un tube et extérieurement d'une portion de surface filetée (103) ayant un diamètre nominal (dn) correspondant à celui (Dn) d'un taraudage (2) d'un élément de circuit (1) pour pouvoir être vissé dans celui-ci, le corps (100) étant également pourvu de moyens d'étanchéité (109, 111) pour assurer une étanchéité du raccordement de la portion d'extrémité de tube (10) à l'élément de circuit (1), **caractérisé en ce que** la portion de surface filetée (103) s'étend sur un premier tronçon terminal (101) du corps (100), ledit premier tronçon terminal (101) du corps (100) comportant des fentes (105) sensiblement axiales délimitant entre elles des bras (104) élastiquement déformables entre un état de repos dans lequel les bras (104) délimitent un diamètre nominal de filetage (dn) sensiblement égal au diamètre nominal (Dn) du taraudage et un état déformé dans lequel le diamètre nominal de filetage (dn) est inférieur au diamètre intérieur (Di) du taraudage (2), et **en ce qu'**un verrou (200) tubulaire est monté dans le corps (100) pour coulisser axialement entre une position de déverrouillage dans laquelle le verrou (200) a un premier tronçon d'extrémité (201) dégagé des bras (104) pour les laisser libres de se déformer et une position de verrouillage dans laquelle le premier tronçon d'extrémité (201) du verrou (200) est en regard des bras (104) pour s'opposer à leur déformation, la portion d'extrémité de tube (10) venant en appui contre le verrou (200) lors de son introduction dans le corps (100) pour l'amener dans ladite position de verrouillage.

2. Dispositif selon la revendication 1, dans lequel le verrou (200) comprend des moyens de son blocage en position de verrouillage.

3. Dispositif selon la revendication 2, dans lequel les moyens de blocage comprennent au moins une patte (203) élastiquement déformable qui est formée dans le verrou pour s'étendre axialement et qui possède au moins un redan (205) externe agencé pour, lorsque le verrou (200) coulisse de sa position de déverrouillage vers sa position de verrouillage, glisser sur une portion interne (112) du corps (100) en provoquant une déformation de la patte (203) vers une position escamotée, la patte (203) revenant élastiquement vers une position de repos lorsqu'elle quitte la portion interne (112) de telle manière que le redan (205) présente une face de butée (207) en regard d'un épaulement (113) de la portion interne (112) pour s'opposer à un déplacement accidentel du verrou (200) vers sa position de déverrouillage.

4. Dispositif selon la revendication 3, dans lequel le redan (205) a une hauteur telle que, lorsque la patte (203) revient élastiquement dans sa position de repos après que le redan (205) a dépassé la portion interne (112), la patte (203) heurte la portion interne (112) en produisant un son.

5. Dispositif selon la revendication 4, dans lequel la face de butée (207) appartenant à la patte (203) est légèrement inclinée pour permettre à un opérateur de ramener le verrou (200) en position de déverrouillage en exerçant un effort axial sur le verrou (200) .

6. Dispositif selon l'une quelconque des revendications 3 à 5, dans lequel le redan (205) comprend une portion étagée pour permettre à un opérateur de ramener le verrou (200) en position de déverrouillage en exerçant un effort axial sur le verrou (200).

7. Dispositif selon l'une quelconque des revendications 3 à 6, dans lequel les moyens d'étanchéité comprennent un joint annulaire (109) monté à l'intérieur du corps (100) en amont de la portion interne (112) pour enserrer la portion d'extrémité de tube (10) lorsque celle-ci est assujettie dans le corps (1) et le verrou (200) comprend un deuxième tronçon d'extrémité (202) reçu serré dans le joint (109) lorsque le verrou (200) est dans sa position de déverrouillage.

8. Dispositif selon l'une quelconque des revendications 3 à 7, dans lequel la portion interne (112) est une collerette.

## Patentansprüche

1. Verbindungsvorrichtung, umfassend einen röhrenförmigen Körper (100), der innen mit Verbindungsmitteln (106, 107, 108) versehen ist, um dort einen Endabschnitt (10) eines Rohres zu befestigen, und außen mit einem Gewindeflächenabschnitt (103), der einen nominalen Durchmesser (dn) hat, der dem Durchmesser (Dn) eines Innengewindes (2) eines Kreislaufelements (1) entspricht, um in dieses geschraubt werden zu können, wobei der Körper (100) ferner mit Dichtungsmitteln (109, 111) versehen ist, um eine Dichtheit der Verbindung des Rohrendabschnittes (10) mit dem Kreislaufelement (1) sicherzustellen, **dadurch gekennzeichnet, dass** sich der Gewindeflächenabschnitt (103) auf einem ersten Endabschnitt (101) des Körpers (100) erstreckt, wobei der genannte erste Endabschnitt (101) des Körpers (100) im Wesentlichen axiale Schlitze (105) umfasst, die zwischen sich Arme (104) begrenzen, die zwischen einem Ruhezustand, in dem die Arme (104) einen nominalen Gewindedurchmesser (dn) begrenzen, der im Wesentlichen gleich dem nominalen Durchmesser (Dn) des Innengewindes ist, und einem verformten Zustand elastisch verformbar sind, in dem der nominale Gewindedurchmesser (dn) kleiner als der Innendurchmesser (Di) des Innengewindes (2) ist, und dass ein röhrenförmiger Riegel (200) in dem Körper (100) so gelagert ist, dass er axial zwischen einer Entriegelungsstellung, in der der Riegel (200) einen ersten Endabschnitt (201) hat, der aus den Armen (104) ausgerückt ist, damit sie sich frei verformen können, und einer Verriegelungsstellung verschiebbar ist, in der sich der erste Endabschnitt (201) des Riegels (200) gegenüber den Armen (104) befindet, um sich ihrer Verformung zu widersetzen, wobei der Rohrendabschnitt (10) während seines Einführens in den Körper (100) an dem Riegel (200) zur Anlage kommt, um ihn in die genannte Verriegelungsstellung mitzunehmen.

2. Vorrichtung nach Anspruch 1, bei der der Riegel (200) Mittel für seine Blockierung in der Verriegelungsstellung umfasst.

3. Vorrichtung nach Anspruch 2, bei der die Blockierungsmittel mindestens eine elastisch verformbare Lasche (203) umfassen, die in dem Riegel so ausgebildet ist, dass sie sich axial erstreckt, und die mindestens einen äußeren Vorsprung (205) hat, der ausgebildet ist, um bei Verschiebung des Riegels (200) von seiner Entriegelungsstellung in seine Verriegelungsstellung auf einem Innenabschnitt (112) des Körpers (100) zu gleiten und dabei eine Verformung der Lasche (203) in eine ausgerückte Position zu bewirken, wobei die Lasche (203) elastisch in eine Ruhestellung zurückkehrt, wenn sie den Innenabschnitt (112) verlässt, derart, dass der Vorsprung (205) eine Anschlagfläche (207) gegenüber einer Schulter (113) des Innenabschnitts (112) aufweist, um sich einer ungewollten Verschiebung des Riegels (200) in seine Entriegelungsstellung zu widersetzen.

4. Vorrichtung nach Anspruch 3, bei dem der Vorsprung (205) eine solche Höhe hat, dass, wenn die Lasche (203) elastisch in ihre Ruhestellung zurückkehrt, nachdem der Vorsprung (205) über den Innenabschnitt (112) hinausgegangen ist, die Lasche (203) an den Innenabschnitt (112) anstößt und dabei einen Ton erzeugt.

5. Vorrichtung nach Anspruch 4, bei der die zur Lasche (203) gehörige Anschlagfläche (207) leicht geneigt ist, um einer Bedienperson zu ermöglichen, den Riegel (200) in die Entriegelungsstellung zurückzubringen, indem er eine axiale Kraft auf den Riegel (200) ausübt.

6. Vorrichtung nach einem der Ansprüche 3 bis 5, bei dem der Vorsprung (205) einen gestuften Abschnitt umfasst, um einer Bedienperson zu ermöglichen, den Riegel (200) in die Entriegelungsstellung zurückzubringen, indem er eine axiale Kraft auf den Riegel (200) ausübt.

7. Vorrichtung nach einem der Ansprüche 3 bis 6, bei dem die Dichtungsmittel eine ringförmige Dichtung (109) umfassen, die im Inneren des Körpers (100) stromaufwärts des Innenabschnitts (112) angebracht ist, um den Rohrendabschnitt (10) eng zu umschließen, wenn dieser in dem Körpers (1) befestigt ist, und der Riegel (200) einen zweiten Endabschnitt (202) umfasst, der fest in der Dichtung (109) aufgenommen ist, wenn der Riegel (200) in seiner Entriegelungsstellung ist.

8. Vorrichtung nach einem der Ansprüche 3 bis 7, bei dem der Innenabschnitt (112) ein Kragen ist.

## Claims

1. Connection device, comprising a tubular body (100) provided on the inside with connection means (106, 107, 108) for attaching thereto an end portion (10) of a tube and on the outside with a threaded surface portion (103) having a nominal diameter (dn) corresponding to that (Dn) of an internal thread (2) of a circuit element (1) so as to be able to be screwed into the latter, the body (100) also being provided with sealing means (109, 111) to seal the connection of the tube end portion (10) to the circuit element (1), **characterized in that** the threaded surface portion (103) extends over a first end section (101) of the body (100), said first end section (101) of the body (100) including substantially axial slots (105) delimiting between them arms (104) elastically deformable between a state of rest in which the arms (104) delimit a nominal thread diameter (dn) substantially equal to the nominal diameter (Dn) of the internal thread and a deformed state in which the nominal thread diameter (dn) is smaller than the inside diameter (Di) of the internal thread (2), and **in that** a tubular latch (200) is mounted in the body (100) to slide axially between an unlatching position in which the latch (200) has a first end section (201) released from the arms (104) to leave them free to deform and a latching position in which the first end section (201) of the latch (200) faces the arms (104) to oppose their deformation, the tube end portion (10) coming to bear against the latch (200) during its insertion into the body (100) to bring it into said latching position.

2. Device according to claim 1, in which the latch (200) comprises means for latching it in the latching position.

3. Device according to claim 2, in which the latching means comprise at least one elastically deformable lug (203) which is formed in the latch to extend axially and which has at least one external step (205) adapted, when the latch (200) slides from its unlatching position toward its latching position, to slide on an internal portion (112) of the body (100) causing a deformation of the lug (203) toward a retracted position, the lug (203) returning elastically toward a rest position when it leaves the internal portion (112) in such a manner that the step (205) has an abutment face (207) facing a shoulder (113) of the internal portion (112) to oppose accidental movement of the latch (200) toward its unlatching position.

4. Device according to Claim 3, in which the step (205) has a height such that, when the lug (203) elastically returns to its rest position after the step (205) has passed the internal portion (112), the lug (203) strikes the inner portion (112), producing a sound.

5. Device according to Claim 4, in which the abutment face (207) belonging to the lug (203) is slightly inclined to allow an operator to return the latch (200) to the unlatching position by exerting an axial force on the latch (200).

6. Device according to any one of claims 3 to 5, in which the step (205) comprises a stepped portion to allow an operator to return the latch (200) to the unlatching position by exerting an axial force on the latch (200).

7. Device according to any one of Claims 3 to 6, in which the sealing means comprise an annular seal (109) mounted inside the body (100) upstream of the internal portion (112) to grip the tube end portion (10) when the latter is secured in the body (1) and the latch (200) comprises a second end section (202) that is a tight fit in the seal (109) when the latch (200) is in its unlatching position.

8. Device according to any one of Claims 3 to 7, in which the internal portion (112) is a flange.
